(19) Europäisches Patentamt / European Patent Office / Office européen des brevets

(11) **EP 3 938 261 B1**

(12) **FASCICULE DE BREVET EUROPEEN**

(45) Date de publication et mention
de la délivrance du brevet:
**03.05.2023 Bulletin 2023/18**

(21) Numéro de dépôt: **20708524.2**

(22) Date de dépôt: **12.03.2020**

(51) Classification Internationale des Brevets (IPC):
**B60W 30/14** *(2006.01)*    **B60W 30/18** *(2012.01)*
**B60W 10/06** *(2006.01)*    **B60W 10/188** *(2012.01)*

(52) Classification Coopérative des Brevets (CPC):
**B60W 30/143; B60W 10/06; B60W 10/188;**
**B60W 30/18072;** B60W 2030/1809; B60W 2520/10;
B60W 2552/15; B60W 2720/10

(86) Numéro de dépôt international:
**PCT/EP2020/056723**

(87) Numéro de publication internationale:
**WO 2020/187708 (24.09.2020 Gazette 2020/39)**

(54) **PROCÉDÉ DE RÉGULATION DE LA VITESSE D'UN VÉHICULE**

VERFAHREN ZUR REGULIERUNG DER GESCHWINDIGKEIT EINES FAHRZEUGS

METHOD FOR REGULATING THE SPEED OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.03.2019 FR 1902666**

(43) Date de publication de la demande:
**19.01.2022 Bulletin 2022/03**

(73) Titulaires:
• **Renault s.a.s
92100 Boulogne Billancourt (FR)**
• **NISSAN MOTOR Co., Ltd.
Yokohama-shi, Kanagawa 221-0023 (JP)**

(72) Inventeurs:
• **DAVINS-VALLDAURA, Joan
78150 LE CHESNAY (FR)**
• **KVIESKA, Pedro
78000 Versailles (FR)**

(74) Mandataire: **Renault Group
Renault s.a.s.
API : TCR GRA 2 36
1, Avenue du Golf
78084 Guyancourt Cedex (FR)**

(56) Documents cités:
EP-A1- 2 718 161     EP-A1- 2 865 914
WO-A1-2014/060825

EP 3 938 261 B1

## Description

La présente invention concerne un procédé de régulation de la vitesse d'un véhicule comprenant une étape de roulage moteur coupé.

De plus en plus de véhicules automobiles sont dotés de systèmes de gestion automatisée de la vitesse du véhicule, également connu sous l'appellation anglo-saxonne « Automatic Cruise Control » ou sous l'acronyme correspondant « ACC ».

Par exemple, des procédés de régulation de la vitesse d'un véhicule automobile à moteur thermique comprennent une étape de roulage moteur coupé en descente. Dans la présente demande, l'expression « couper le moteur » signifie que le fonctionnement du moteur thermique est interrompu, par mise à l'arrêt du système d'allumage par exemple, les pistons étant donc immobilisés dans les cylindres. Une étape de roulage moteur coupé est également communément désignée par l'appellation anglo-saxonne « sailing » et consiste à couper le moteur du véhicule lorsque sa vitesse n'est pas nulle. En mettant en oeuvre une étape de roulage moteur coupé en descente, la gravité compense la traînée aérodynamique et la vitesse $v_{véh}$ du véhicule reste constante. Un tel procédé met donc en oeuvre une régulation de la vitesse du véhicule tout en limitant la consommation de carburant. Un tel procédé est, par exemple, connu du document EP 2 718 161 A1.

Bien qu'un tel procédé apporte globalement satisfaction, il présente l'inconvénient de ne pouvoir être utilisé que dans quelques cas très particuliers.

La présente invention vise à réguler la vitesse du véhicule tout en diminuant la consommation de carburant.

A cet effet, il est proposé un procédé de régulation de la vitesse d'un véhicule autour d'une vitesse de consigne, comprenant la détermination d'un ensemble de conditions nécessaires et le déclenchement d'une étape de roulage moteur coupé en fonction de l'ensemble de conditions nécessaires.

Selon une caractéristique générale de ce procédé, l'ensemble de conditions nécessaires comprend l'engagement du véhicule dans une pente ascendante à une vitesse courante supérieure à la vitesse de consigne.

Un tel procédé permet de réguler la vitesse par roulage moteur coupé en montée afin d'utiliser la gravité pour freiner le véhicule au lieu d'un frein hydraulique ou d'un frein moteur. On limite ainsi l'usure des pastilles de frein du véhicule et on économise du carburant.

Avantageusement, l'ensemble de conditions nécessaires comprend la supériorité d'une différence entre la vitesse courante et la vitesse de consigne par rapport à un seuil de vitesse.

On peut ainsi déterminer une durée restante de freinage de sorte à s'assurer que l'étape de roulage moteur coupé ne soit pas trop courte. En évitant un roulage moteur coupé de trop courte durée, on économise du carburant de manière plus efficace.

De préférence, le seuil de vitesse est paramétrable par un opérateur et/ou par un utilisateur du véhicule.

Avantageusement, le seuil de vitesse est compris entre 15 km/h et 25 km/h.

Selon un autre mode de réalisation, l'ensemble de conditions nécessaires comprend une condition dépendant d'une valeur de la pente ascendante et/ou d'une valeur d'une dérivée de la pente ascendante.

On peut ainsi estimer une durée restante du roulage en pente de sorte à s'assurer que l'étape de roulage moteur coupé ne soit pas trop courte, et ce en l'absence d'information contextuelle.

De préférence, l'ensemble de conditions nécessaires comprend la supériorité de la valeur de la pente ascendante par rapport à un seuil de pente.

Un seuil de pente permet d'améliorer la précision de l'estimation de la durée restante de la pente ascendante car les variations de pente d'une route sont généralement lentes.

Avantageusement, le seuil de pente est compris entre 2,5 % et 3,5 %.

Selon un autre mode de mise en oeuvre, l'ensemble de conditions nécessaires comprend la supériorité de la valeur de la dérivée de la pente ascendante par rapport à un seuil de dérivée.

Un seuil de dérivée permet d'améliorer la précision de l'estimation de la durée restante de la pente ascendante car une pente varie toujours de façon continue. Si l'on utilise le seuil de pente et le seuil de dérivée, on améliore encore davantage cette précision.

Au sens de la présente demande, la dérivée de la pente peut désigner la dérivée par rapport au temps ou la dérivée par rapport à la distance parcourue. En particulier si la dérivée de la pente désigne la dérivée par rapport au temps, le seuil de dérivée peut être variable, par exemple proportionnel à la vitesse du véhicule. La dérivée de la pente par rapport au temps est directement proportionnelle à la vitesse : un véhicule qui roule doucement verra la pente varier lentement, un véhicule qui roule très vite verra la pente varier rapidement. Ce paramètre peut être mis au point en essai ou simulation.

De préférence, le seuil de dérivée est déterminé en tenant compte de la vitesse courante.

Un seuil de dérivée déterminé de la sorte est tout particulièrement approprié car il est tenu compte du fait que la dynamique de pente vue par le véhicule dépend directement de la vitesse courante.

Avantageusement, le seuil de dérivée est compris entre 1,5 %/s et 2,5 %/s.

Un seuil de pente et/ou un seuil de dérivée compris dans les plages de valeurs précitées autorise un déclenchement d'une étape de roulage moteur coupé en évitant que la durée de cette étape soit trop courte pour économiser efficacement du carburant avec un moteur à combustion interne classique de véhicule automobile.

Selon un autre mode de réalisation, l'étape de roulage moteur coupé est suivie du déclenchement d'une étape d'application d'un frein hydraulique en roulage moteur coupé si le véhicule quitte une pente ascendante et s'engage dans un plat à une vitesse de sortie de pente supérieure à la vitesse de consigne.

Le déclenchement d'une telle étape permet la poursuite de la régulation en roulage moteur coupé lorsque le véhicule sort d'une pente ascendante.

D'autres buts, caractéristiques et avantages de l'invention apparaîtront à la lecture de la description suivante, donnée uniquement à titre d'exemple non limitatif, et faite en référence aux dessins annexés sur lesquels :

> [Fig 1] représente un procédé selon un mode de réalisation de l'invention,
> [Fig 2] représente schématiquement un profil de route présentant une pente,
> [Fig 3] est un graphe représentant la valeur de la pente de la figure 2, et
> [Fig 4] est un graphe représentant la dérivée de la pente de la figure 2.

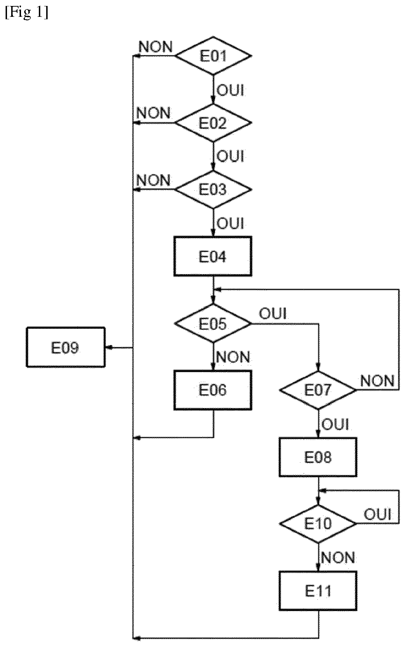

En référence à la figure 1, on a schématiquement représenté un procédé de régulation de la vitesse d'un véhicule automobile. Le procédé est plus particulièrement prévu pour être mis en oeuvre dans un véhicule comprenant un moteur à combustion interne. Le procédé vise à maintenir la vitesse du véhicule aussi constante que possible autour d'une vitesse $v_{cons}$ de consigne. Le procédé de la figure 1 peut être utilisé comme une alternative ou comme un complément d'un procédé de régulation de la vitesse tel qu'un procédé comprenant une étape de roulage moteur coupé en descente.

Le procédé représenté sur la figure 1 peut être mis en oeuvre par un dispositif de régulation (non représenté) à des intervalles réguliers, par exemple à chaque seconde. Par la suite, une mise en oeuvre particulière du procédé est décrite.

Le procédé comprend trois étapes de test E01, E02 et E03 successives.

Au cours de l'étape E01, on détermine si une différence entre la vitesse $v_{véh}$ courante du véhicule et la vitesse de consigne $v_{cons}$ est supérieure à un seuil de vitesse $s_{vitesse}$. Le seuil $s_{vitesse}$ est compris entre 15 km/h et 25 km/h, et de préférence sensiblement égal à 20 km/h.

Au cours de l'étape E02, on détermine si le véhicule est engagé dans une pente présentant une valeur $\theta\%$ de pente supérieure à un seuil de pente $s_{pente\_1}$. Le seuil $s_{pente\_1}$ est compris entre 2,5 % et 3,5 %, et de préférence égal à 3 %.

Au cours de l'étape E03, on détermine si la dérivée $diff(\theta\%)$ de la pente par rapport au temps est supérieure à un seuil de dérivée $s_{dérivée\_1}$. Le seuil $s_{dérivée\_1}$ est compris entre 1,5 %/s et 2,5 %/s, et de préférence égal à 2 %/s. Dans la présente demande, le signe « diff() » désigne la fonction dérivée par rapport au temps :

$$\mathrm{diff}(\theta\%) = \theta\%$$

Le seuil $s_{dérivée\_1}$ peut dépendre de la vitesse courante car la dynamique de la pente vue par le véhicule dépend directement de cette valeur. En effet, pour une pente donnée, la dérivée de la pente par rapport à la distance est la même alors que la dérivée de la pente par rapport au temps sera plus importante si la vitesse courante est élevée. La relation entre le seuil $s_{dérivée\_1}$ et la vitesse courante peut être mise au point au cours d'essais ou de simulations.

Si la réponse à l'une quelconque des étapes E01, E02 et E03 est « non », on applique une étape E09 de sortie du procédé. Dans ce cas, le procédé est inactif jusqu'à la mise en oeuvre suivante. Si les réponses à chacune des étapes E01, E02 et E03 sont « oui », on applique une étape E04.

Au cours de l'étape E04, on déclenche un roulage moteur coupé du véhicule. Ce faisant, on arrête le moteur du véhicule. Comme le véhicule est en pente ascendante et n'est plus propulsé par le moteur, sa vitesse $v_{véh}$ décroît vers la vitesse de consigne. A l'issue de l'étape E04, le véhicule poursuit en roulage moteur coupé.

Ensuite, on met en oeuvre une étape de test E05. Au cours de l'étape E05, on détermine si la différence entre la vitesse $v_{véh}$ et la vitesse $v_{cons}$ est supérieure au seuil $s_{vitesse}$.

Si la réponse à l'étape E05 est « non », on applique une étape E06 au cours de laquelle on met fin au roulage moteur coupé. En d'autres termes, on redémarre le moteur du véhicule. L'étape E09 est mise en oeuvre à la suite de l'étape E06.

Si la réponse à l'étape E05 est « oui », on met en oeuvre une étape de test E07. Au cours de l'étape E07, on détermine si la valeur $\theta\%$ de la pente est inférieure à un seuil de pente $s_{pente\_2}$ et si la valeur $diff(\theta\%)$ de la dérivée de la pente est inférieure à un seuil de dérivée $s_{dérivée\_2}$. Comparer à la fois la pente et sa dérivée aux seuils respectifs $s_{pente\_2}$ et $s_{dérivée\_2}$ permet de distinguer les cas de pente nulle repartant en pente descendante ou ascendante. Les seuils $s_{pente\_2}$ et $s_{dérivée\_2}$ sont de préférence de l'ordre d'un dixième des seuils $s_{pente\_1}$ et $s_{dérivée\_1}$. En l'espèce, le seuil $s_{pente\_2}$ est compris entre 0,4 % et 0,6 % tandis que le seuil $s_{dérivée\_2}$ est compris entre 0,25 %/s et 0,35 %/s.

Si la réponse à l'étape E07 est « non », on retourne en amont de l'étape E05. Si la réponse à l'étape E07 est « oui », on applique une étape E08.

Au cours de l'étape E08, on applique un frein hydraulique en roulage moteur coupé. En d'autres termes, le moteur du véhicule automobile reste arrêté tandis qu'un frein hydraulique est actionné pour freiner le véhicule.

À la suite de l'étape E08, le procédé comprend une étape de test E10. Au cours de l'étape E10, on détermine si la différence entre la vitesse $v_{véh}$ et la vitesse $v_{cons}$ est supérieure au seuil $s_{vitesse}$.

Tant que la réponse à l'étape E10 est « oui », on retourne en amont de l'étape E10 et on continue d'appliquer l'étape E10. Dès que la réponse à l'étape E10 est « non », on applique une étape E11 au cours de laquelle on met fin à l'application d'un frein hydraulique en roulage moteur coupé. En d'autres termes, on redémarre le moteur du véhicule et on relâche le frein hydraulique. L'étape E09 est mise en oeuvre à la suite de l'étape E11.

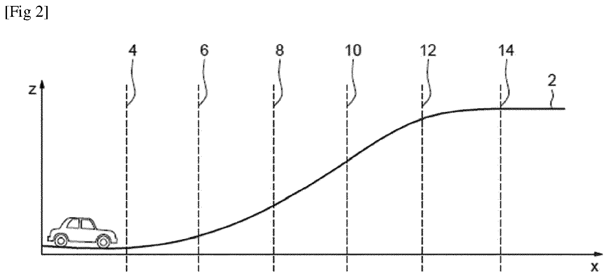

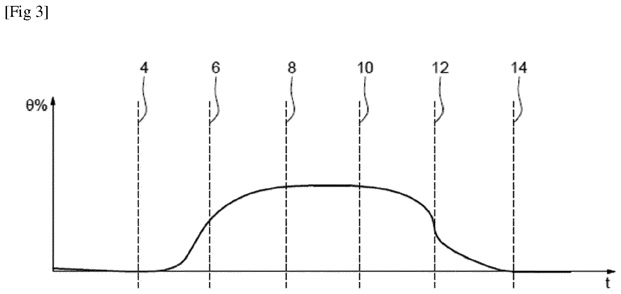

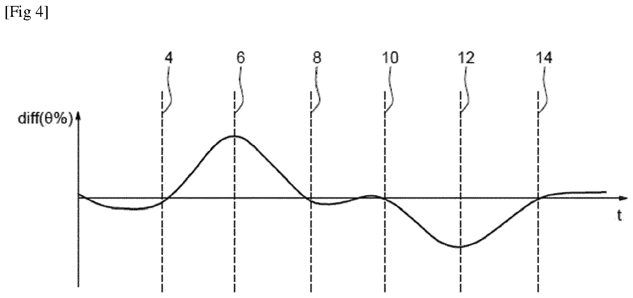

Comme cela sera expliqué en référence aux figures 2 à 4, les plages des seuils $s_{pente\_1}$ et $s_{dérivée\_1}$ ont été choisies de manière à permettre l'asservissement efficace de la vitesse $v_{véh}$ vers la consigne $v_{cons}$ tout en assurant que, si un roulage moteur coupé est mis en oeuvre, le moteur ne soit pas redémarré avant un certain temps minimum. En l'espèce, les plages précitées pour les seuils $s_{pente\_1}$ et $s_{dérivée\_1}$ permettent d'éviter un redémarrage du moteur moins de trois secondes après le déclenchement du roulage moteur coupé. En effet, le redémarrage du moteur consomme de l'énergie et, avec un moteur à combustion interne classique de véhicule automobile, il n'est pas intéressant de faire du roulage moteur coupé pour des durées inférieures à trois secondes.

L'étape E01 de comparaison avec le seuil $s_{vitesse}$ permet d'identifier les cas de figure où la vitesse $v_{véh}$ est bien supérieure à la vitesse $v_{cons}$ lors de l'engagement du véhicule dans une pente ascendante. Par exemple, on identifie des cas de figure correspondant à un véhicule circulant sur une route départementale arrivant dans une zone urbaine par une montée. A ce moment, la vitesse de consigne passe de 90 km/h à 50 km/h. Selon un autre exemple, le véhicule est en montée et le régulateur de vitesse adaptatif détecte l'apparition d'une cible plus lente.

Les étapes de test E02 et E03 permettent d'identifier de manière robuste la longueur d'une montée sans disposer d'information contextuelle. En déterminant la longueur d'une montée, on évite d'autoriser un roulage moteur coupé pour une montée trop courte.

Bien entendu, le procédé peut être utilisé sans sortir du cadre de l'invention en complément d'un procédé utilisant une information contextuelle, telle qu'une information donnée par un dispositif de positionnement par satellite (GNNS) ou par un moyen de lecture des panneaux routiers.

On a représenté sur la figure 2 un profil de route. Plus particulièrement, le profil de route correspond à l'altitude z de la route en fonction de la position x sur l'axe longitudinal du véhicule.

En référence à la figure 2, une pente ascendante 2 comprend une première phase entre les lignes pointillées 4 et 6 et une deuxième phase entre les lignes pointillées 6 et 8. Les première et deuxième phases correspondent à l'établissement de la pente 2. Plus particulièrement, au cours de la première phase, la pente θ% augmente et la dérivée diff(θ%) de la pente augmente. Au cours de la deuxième phase, la pente θ% augmente et sa dérivée diff(θ%) diminue. À la fin de la deuxième phase, la pente 2 est établie et sa dérivée diff(θ%) est nulle.

La pente comprend une troisième phase intercalée entre les lignes pointillées 8 et 10. La troisième phase correspond à une pente établie. En d'autres termes, la pente θ% reste constante et sa dérivée diff(θ%) est nulle.

À la fin de la pente 2, une quatrième phase est intercalée entre les lignes pointillées 10 et 12 et une cinquième phase est intercalée entre les lignes pointillées 12 et 14. Les quatrième et cinquième phases correspondent au retour dans le plat, c'est-à-dire à l'inverse de l'établissement de la pente. Plus particulièrement, au cours de la quatrième phase, la pente θ% diminue et sa dérivée diff(θ%) diminue. Au cours de la cinquième phase, la pente θ% diminue et sa dérivée diff(θ%) augmente. A l'issue de la cinquième phase, la pente θ% et sa dérivée diff(θ%) sont nulles.

Les figures 2 à 4 mettent en évidence le fait que, si la première phase dure une durée t, on peut raisonnablement supposer que la dynamique des deuxième, quatrième et cinquième phases sera comparable et que la pente durera une durée totale $t_{total}$ supérieure à quatre fois la durée t :

$$t_{total} \geq 4 \times t$$

Par exemple, si la première phase dure cinq secondes, on peut raisonnablement penser que la pente durera environ 20 secondes si la durée de la troisième phase est nulle et davantage si la durée de la troisième phase est non nulle.

Ainsi, le choix des plages de valeurs précitées pour les seuils $s_{pente\_1}$ et $s_{dérivée\_1}$ permet d'identifier une pente ascendante et impliquant encore une distance à parcourir suffisante pour freiner le véhicule et ne pas rester en roulage moteur coupé pendant une durée trop courte.

Le choix de la plage de valeurs précitée pour le seuil $s_{vitesse}$ permet aussi d'éviter un roulage moteur coupé trop court. En effet, à la suite de l'étape E04, le véhicule va décélérer. Il est important d'avoir un écart entre la vitesse $v_{véh}$ au début du procédé et la vitesse $v_{cons}$ suffisant pour ne pas quitter le roulage moteur coupé trop rapidement.

Selon l'exemple ci-dessous, le véhicule automobile circule à une vitesse $v_{véh}$ de 90 km/h pour une consigne $v_{cons}$ de 50 km/h. Dans le même temps, le véhicule est engagé sur une pente de 10 % correspondant à une inclinaison de 5,7° et la dérivée de la pente est positive et égale à 5 %/s.

L'application des étapes E01 à E03 du procédé la figure 1 permet d'identifier une pente de longueur suffisamment longue pour permettre un roulage moteur coupé efficace. Ainsi, une régulation de la vitesse du véhicule vers la vitesse de consigne est mise en oeuvre. En outre, la consommation en carburant est diminuée par la mise en oeuvre d'un roulage moteur coupé sur une durée suffisamment longue. Par ailleurs, les pastilles de frein du véhicule sont économisées. L'économie de carburant et des pastilles de freins est réalisée par l'utilisation de la gravité pour traîner le véhicule plutôt que le frein hydraulique ou le frein moteur.

Grâce aux étapes E07, E08, E10 et E11, lorsque le véhicule quitte la pente ascendante et engage un plat, si la décélération n'a pas été suffisante pour arriver à la vitesse de consigne, on garde le roulage moteur coupé et on applique un frein hydraulique. Ce faisant, on continue de mettre en oeuvre la régulation de la vitesse tout en diminuant encore la consommation en carburant.

## Revendications

1. Procédé de régulation de la vitesse d'un véhicule autour d'une vitesse de consigne, comprenant la détermination (E01, E02, E03) d'un ensemble de conditions nécessaires et le déclenchement (E04) d'une étape de roulage avec le moteur coupé en fonction de l'ensemble de conditions nécessaires, **caractérisé en ce que** l'ensemble de conditions nécessaires comprend l'engagement du véhicule dans une pente ascendante à une vitesse courante supérieure à la vitesse de consigne.

2. Procédé selon la revendication 1, dans lequel l'ensemble de conditions nécessaires comprend la supériorité d'une différence entre la vitesse courante ($v_{véh}$) et la vitesse de consigne ($v_{cons}$) par rapport à un seuil de vitesse ($s_{vitesse}$).

3. Procédé selon la revendication 2, dans lequel le seuil de vitesse ($s_{vitesse}$) est compris entre 15 km/h et 25 km/h.

4. Procédé selon l'une quelconque des revendications 1 à 3, dans lequel l'ensemble de conditions nécessaires comprend une condition dépendant d'une valeur ($\theta\%$) de la pente ascendante et/ou d'une valeur d'une dérivée (diff($\theta\%$)) de la pente ascendante.

5. Procédé selon la revendication 4, dans lequel l'ensemble de conditions nécessaires comprend la supériorité de la valeur ($\theta\%$) de la pente ascendante par rapport à un seuil de pente ($s_{pente\_1}$).

6. Procédé selon la revendication 5, dans lequel le seuil de pente ($s_{pente\_1}$) est compris entre 2,5 % et 3,5 %.

7. Procédé selon l'une quelconque des revendications 4 à 6, dans lequel l'ensemble de conditions nécessaires comprend la supériorité de la valeur de la dérivée (diff($\theta\%$)) de la pente ascendante par rapport à un seuil de dérivée ($s_{dérivée\_1}$).

8. Procédé selon la revendication 7, dans lequel le seuil de dérivée ($s_{dérivée\_1}$) est déterminé en tenant compte de la vitesse courante ($v_{véh}$).

9. Procédé selon la revendication 7 ou 8, dans lequel le seuil de dérivée ($s_{dérivée\_1}$) est compris entre 1,5 %/s et 2,5 %/s.

10. Procédé selon l'une quelconque des revendications 1 à 9 dans lequel l'étape (E04) de roulage avec le moteur coupé est suivie du déclenchement (E08) d'une étape d'application d'un frein hydraulique en roulage avec le moteur coupé si le véhicule quitte une pente ascendante et s'engage dans un plat à une vitesse de sortie de pente supérieure à la vitesse de consigne.

## Patentansprüche

1. Verfahren zur Regulierung der Geschwindigkeit eines Fahrzeugs um eine Sollgeschwindigkeit herum, umfassend das Bestimmen (E01, E02, E03) einer Menge von erforderlichen Bedingungen und das Auslösen (E04) eines Schritts des Fahrens mit ausgeschaltetem Motor je nach der Menge von notwendigen Bedingungen, **dadurch gekennzeichnet, dass** die Menge von erforderlichen Bedingungen umfasst, dass das Fahrzeug eine Steigung bei einer aktuellen Geschwindigkeit befährt, die höher als die Sollgeschwindigkeit ist.

2. Verfahren nach Anspruch 1, wobei die Menge von erforderlichen Bedingungen umfasst, dass eine Differenz zwischen der aktuellen Geschwindigkeit ($v_{Fzg}$) und der Sollgeschwindigkeit ($v_{soll}$) größer als ein Geschwindigkeitsschwellenwert ($s_{Geschw}$) ist.

3. Verfahren nach Anspruch 2, wobei der Geschwindigkeitsschwellenwert ($s_{Geschw}$) zwischen 15 km/h und 25 km/h beträgt.

4. Verfahren nach einem der Ansprüche 1 bis 3, wobei die Menge von erforderlichen Bedingungen eine Bedingung umfasst, die von einem Wert ($\theta\%$) der Steigung und/oder einem Wert einer Abweichung (diff($\theta\%$)) der Steigung abhängig ist.

5. Verfahren nach Anspruch 4, wobei die Menge von erforderlichen Bedingungen umfasst, dass der Wert ($\theta\%$) der Steigung größer als ein Steigungsschwellenwert ($s_{Steigung\_1}$) ist.

6. Verfahren nach Anspruch 5, wobei der Steigungsschwellenwert ($s_{Steigung\_1}$) zwischen 2,5 % und 3,5 % beträgt.

7. Verfahren nach einem der Ansprüche 4 bis 6, wobei die Menge von erforderlichen Bedingungen umfasst, dass der Wert der Abweichung (diff($\theta$%)) der Steigung größer als ein Abweichungsschwellenwert ($s_{Ableitung\_1}$) ist.

8. Verfahren nach Anspruch 7, wobei der Ableitungsschwellenwert ($s_{Ableitung\_1}$) unter Berücksichtigung der aktuellen Geschwindigkeit ($v_{Fzg}$) bestimmt wird.

9. Verfahren nach Anspruch 7 oder 8, wobei der Ableitungsschwellenwert ($s_{Ableitung\_1}$) zwischen 1,5 %/s und 2,5 %/s beträgt.

10. Verfahren nach einem der Ansprüche 1 bis 9, wobei auf den Schritt (E04) des Fahrens mit ausgeschaltetem Motor die Auslösung (E08) eines Schritts des Betätigens einer hydraulischen Bremse beim Fahren mit ausgeschaltetem Motor folgt, wenn das Fahrzeug eine Steigung verlässt und eine ebene Strecke mit einer Steigungsausfahrgeschwindigkeit befährt, die höher als die Sollgeschwindigkeit ist.

**Claims**

1. Method for regulating the speed of a vehicle around a setpoint speed, comprising the determination (E01, E02, E03) of a set of necessary conditions and the triggering (E04) of a step of running with the engine switched off as a function of the set of necessary conditions, **characterized in that** the set of necessary conditions comprises the entry of the vehicle into an upslope at a current speed greater than the setpoint speed.

2. Method according to Claim 1, wherein the set of necessary conditions comprises the superiority of a difference between the current speed ($v_{veh}$) and the setpoint speed ($v_{setpoint}$) over a speed threshold ($s_{speed}$).

3. Method according to Claim 2, wherein the speed threshold ($s_{speed}$) lies between 15 km/h and 25 km/h.

4. Method according to any one of Claims 1 to 3, wherein the set of necessary conditions comprises a condition dependent on a value ($\theta$%) of the upslope and/or of a value of a drift (diff($\theta$%)) of the upslope.

5. Method according to Claim 4, wherein the set of necessary conditions comprises the superiority of the value ($\theta$%) of the upslope over a slope threshold ($s_{slope\_1}$).

6. Method according to Claim 5, wherein the slope threshold ($s_{slope\_1}$) lies between 2.5% and 3.5%.

7. Method according to any one of Claims 4 to 6, wherein the set of necessary conditions comprises the superiority of the value of the drift (diff($\theta$%)) of the upslope over a drift threshold ($s_{drift\_1}$).

8. Method according to Claim 7, wherein the drift threshold ($s_{drift\_1}$) is determined by taking account of the current speed ($v_{veh}$).

9. Method according to Claim 7 or 8, wherein the drift threshold ($s_{drift\_1}$) lies between 1.5%/s and 2.5%/s.

10. Method according to any one of Claims 1 to 9, wherein the step (E04) of running with the engine switched off is followed by the triggering (E08) of a step of application of a hydraulic brake when running with the engine switched off if the vehicle leaves an upslope and enters into a level stretch at a slope exit speed greater than the setpoint speed.

[Fig 1]

[Fig 2]

[Fig 3]

[Fig 4]

**EP 3 938 261 B1**

## RÉFÉRENCES CITÉES DANS LA DESCRIPTION

**Documents brevets cités dans la description**

- EP 2718161 A1